# EUROPÄISCHE PATENTSCHRIFT

(11) **EP 1 053 151 B1**
(45) Veröffentlichungstag und Bekanntmachung des Hinweises auf die Patenterteilung: **04.06.2003**
(21) Anmeldenummer: 99910208.0
(22) Anmeldetag: 09.02.1999
(51) Int. Cl.: B60T 8/36, F16K 31/06, H01F 7/08

(54) **DRUCKSTEUERVENTIL**
PRESSURE CONTROL VALVE
SOUPAPE DE COMMANDE DE PRESSION

(30) Priorität: 11.02.1998 DE 19805404
(43) Veröffentlichungstag der Anmeldung: 22.11.2000
(73) Patentinhaber: Continental Teves AG & Co. oHG, 60488 Frankfurt (DE)
(72) Erfinder: LAUER, Josef, D-66620 Nonnweiler (DE); SCHULZ, Christian, D-64560 Riedstadt (DE); GARCIA-QUILON, José, D-63674 Altenstadt (DE)
(86) Internationale Anmeldenummer: EP9900826
(87) Internationale Veröffentlichungsnummer: WO99041121

(56) Entgegenhaltungen:
- EP-A- 0 670 445
- WO-A-93/19961
- WO-A-95/03961
- WO-A-95/07201
- DE-A- 4 422 491
- DE-A- 19 621 229
- US-A- 5 344 118
- US-A- 5 460 437
- US-A- 5 653 249

## Beschreibung

Die Erfindung betrifft ein Drucksteuerventil, insbesondere für schlupfgeregelte Kraftfahrzeug-Bremsanlagen nach dem Oberbegriff des Patentanspruchs 1.

Aus der US 5,460,437 ist bereits ein in Grundstellung geschlossenes Drucksteuerventil bekannt geworden, mit einem Ventilgehäuse, das in einer Gehäuseöffnung einen Ventilsitz aufnimmt, an dem ein Ventilschließglied anliegt. Das Ventilschließglied ist als separates Bauteil in einen elektromagnetisch betätigbaren Führungskörper eingesetzt, der sich axial beweglich entlang der Wandung des Ventilgehäuses abstützt.

Zur Herstellung eines solchen Ventils bedarf es besonderer Einstellmaßnahmen, um eine vorbeschriebene Einpreßtiefe des Ventilschließgliedes im Führungskörper zum sicheren öffnen und Verschließen des Ventilsitzes zu gewährleisten. Die Fixierung des Ventilschließgliedes im Führungskörper basiert auf einer möglichst präzisen Preßpassung, um ein unerwünschtes Lockern oder Verformen beider Preßpassungsteile zu verhindern. Die Montage der Ventilspule ist infolge der engen Passungstoleranzen erschwert. Durch die Vereinigung des Jochrings mit dem Ventilgehäuse ist die Ventilspule nicht universell verwendbar.

Die US-A-5 653 249 offenbart ein Drucksteuerventil der gattungsbildenden Art, das zwischen dem Ventilschließglied und dem Führungskörper eine am Ventilschließglied angebrachte konische Anfasung aufweist, die sich in Richtung einer Bohrung erstreckt. Der konischen Anfasung folgt ein spielfreier Fügeabschnitt, der eine radial umlaufende Einschnürung aufweist.

Die Aufgabe der vorliegenden Erfindung ist es, ein Drucksteuerventil der angegebenen Art derart zu verbessern, daß eine von Passungstoleranzen unabhängige Einstellung des Ventilschließgliedes möglich ist.

Weitere Merkmale, Vorteile und Ausgestaltungsmöglichkeiten der Erfindung gehen im nachfolgenden aus der Beschreibung eines Ausführungsbeispieles anhand mehrerer Figuren hervor.

Es zeigen:
- Fig. 1: ein elektromagnetisch betätigbares Drucksteuerventil im Längsschnitts,
- Fig. 2: einen Ausschnitt aus Fig. 1 zur Darstellung des Ventilschließgliedes während des Einpreßvorganges in den Führungskörper.

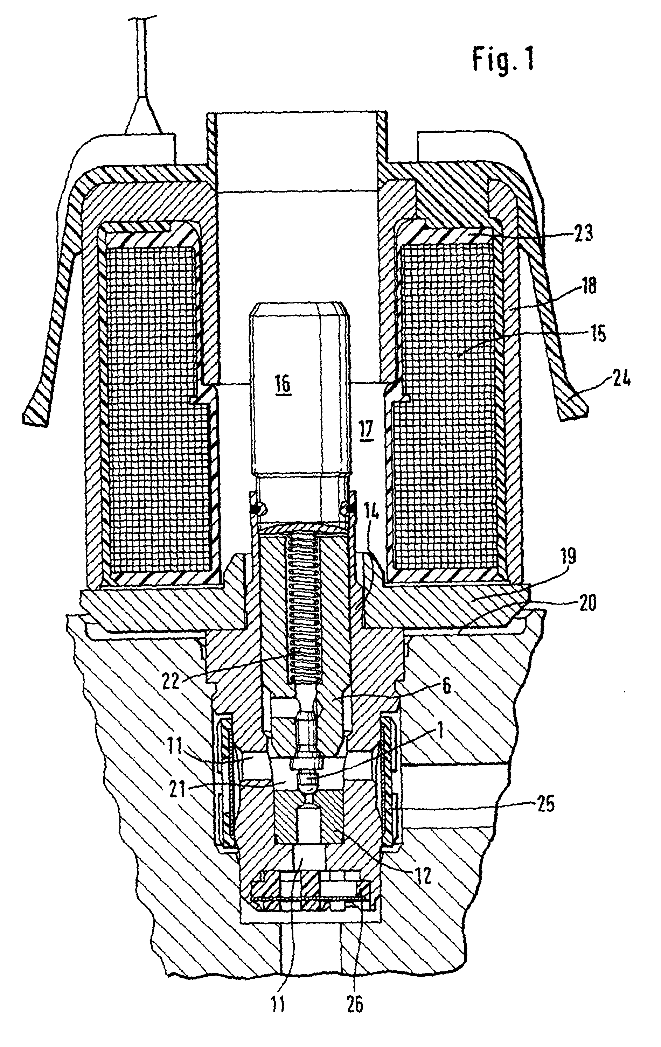

Die Fig. 1 zeigt eine Gesamtansicht in erheblich vergrößerter Darstellung des in Grundstellung geschlossenen Drucksteuerventils, das insbesondere für schlupfgeregelte Kraftfahrzeug-Bremsanlagen verwendet wird. Das Ventilgehäuse 14 des Drucksteuerventils ist in vorliegendem Ausführungsbeispiel in Patronenbauweise ausgeführt und mittels einer Selbstverstemmung des vorzugsweise aus Stahl bestehenden, härteren Ventilgehäuse-Werkstoffes in einen relativ dazu weicheren Ventilaufnahmekörper 20 eingepreßt. Das Ventilgehäuse 14 nimmt in seiner Gehäuseöffnung 21 einen Ventilsitz 12 auf, an dem unter der Wirkung einer Druckfeder 22 ein in einem Führungskörper 6 eingepreßtes Ventilschließglied 1 anliegt. Der Führungskörper 6 ist in der Funktion eines Magnetankers axial beweglich entlang der Wandung der Gehäuseöffnung 21 geführt. Zur elektromagnetischen Betätigung des Führungskörpers 6 ist auf dem Ventilgehäuse 14 eine Ventilspule 15 angeordnet, die auf einer zwischen der Ventilspule 15 und dem Ventilgehäuse 14 angeordnete Magnetschlußscheibe 19 zentriert wird. Das Ventilgehäuse 14 ist an seinem hülsenförmigen Schaftabschnitt mittels eines eingepreßten und verschweißten Verschlußstopfen 16 auf der dem Ventilsitz 12 abgewandten Seite verschlossen. Der Verschlußstopfen 16 übernimmt im vorliegenden Ausführungsbeispiel die Funktion eines Magnetkerns. Die Ventilspule 15 ist von einem Jochring 18 umgeben, der am Ende seiner äußeren Mantelfläche die Magnetschlußscheibe 19 kontaktiert, während sich das andere Ende der Mantelinnenseite nur bis etwa zur Stufe des Spulenträgers 23 erstreckt. Hierbei verbleibt zwischen dem Verschlußstopfen 16 und der Spule 15 im Bereich des Spulenträgers 23 ein Ringraum 17, der sich von der Magnetschlußscheibe 19 bis zum offenen Ende des Jochrings 18 erstreckt. Im vorliegenden Ausführungsbeispiel ist die Ventilspule 15 mit dem Spulenträger 23 und dem Jochring 18 eine eigenständig handhabbare elektrische Unterbaugruppe, die mittels an ihr angebrachter Rasthaken innerhalb eines elektrische und/oder elektronische Bauteile aufweisenden, nicht dargestellten Deckels befestigt wird, bevor diese Unterbaugruppe auf das Drucksteuerventil im Ventilaufnahmekörper 20 aufgesetzt wird. Wie bereits erwähnt, wird die Ventilspule 15 über die Magnetschlußscheibe 19 am hülsenförmigen Schaftabschnitt des Ventilgehäuses 14 zentriert. Dies geschieht mittels einer abgesetzten, in Richtung des Ringraums 17 sich erstreckenden, konisch abgesetzten Anfasung der Magnetschlußscheibe 19.

Die Anordnung eines zwischen der Ventilspule 15 und dem Drucksteuerventil gelegenen Ringraums 17 ermöglicht vorteilhafterweise die Verwendung einer einheitlich und damit universell verwendbaren Ventilspule 15 für Drucksteuerventile unterschiedlicher Baugröße (sogenannte Einheitsspule) und bietet bei Wunsch oder Bedarf die Möglichkeit, den durch den Ringraum 17 gegebenen Freiraum zur Aufnahme von Vergußmasse zu verwenden, die ergänzend oder anstelle der vorgeschlagenen Rasthaken 24 die gewünschte Verbindung, Befestigung und ggf. auch Abdichtung der Ventilspule 15 mit der der Ventilspule 15 zugeordneten Gehäusebaugruppe gewährleistet. Der Ringraum 17 erleichtert überdies das Aufsetzen der Ventilspule 15 auf das Drucksteuerventil.

Bezüglich dem hydraulischen Teil des Drucksteuerventils soll nicht unerwähnt bleiben, daß durch die vorgeschlagene gestufte Hülsenkontur des Ventilgehäuses 14 nicht nur beste Voraussetzungen zur Erzeugung der notwendigen Halte- und Dichtkraft innerhalb des Ventilaufnahmekörpers 20 geschaffen werden, sondern auch eine einfache Anordnung von Filterelementen 25, 26 zustande kommt, die im vorliegenden Ausführungsbeispiel als Platten- und Ringfilter ausgeführt sind und die die in Horizontal- als auch Vertikalrichtung in das Ventilgehäuse 14 einmündenden Druckmittelkanäle 11 sicher vor einer Verschmutzung der Ventilinnenteile schützen. In vorliegendem Ausführungsbeispiel ist der Ventilsitz 12 als separates, rotationssymmetrisches Bauteil aus Richtung des die Gehäuseöffnung 21 verschließenden Verschlußstopfens 16 bis auf Anschlag eingepreßt und/oder verstemmt. Herstellals auch Befestigungsalternativen sind hierzu denkbar, werden jedoch nicht als wesentliches Lösungsmerkmal der Erfindung angesehen.

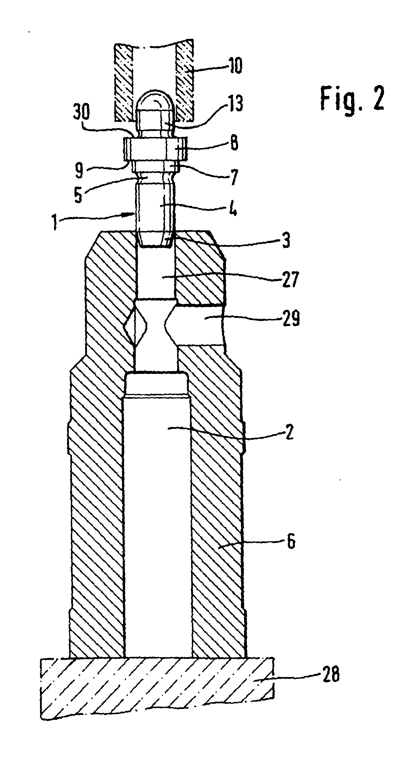

Im nachfolgenden soll vielmehr auf die verblüffend einfache spielfreie Positionierung des Ventilschließgliedes 1 am Führungskörper 6 eingegangen werden. Eine spezielle Kontur des Ventilschließgliedes 1 führt während des Einpreßvorganges zu einer absolut sicheren Preßpassung im Führungskörper 6. Zur besseren Veranschaulichung wird daher im nachfolgenden auf Fig. 2 Bezug genommen.

Die Fig. 2 zeigt in einer erheblich vergrößerten Darstellung das aus Fig. 1 bekannte, an einer Auflagefläche 28 sich abstützende, vom Ventilschließglied 1 abgewandte Ende des Führungskörpers 6, zu dessen konzentrische, geradlinige, d.h. nicht gestuften Aufnahmebohrung 27 für das Ventilschließglied 1 ein hülsenförmiges Einpreßwerkzeug 10 ausgerichtet ist. Das Ventilschließglied 1 befindet sich zwischen dem Einpreßwerkzeug 10 und dem Führungskörper 6 mit seiner kegelstumpfförmigen Anfasung 3 in Kontakt mit der Aufnahmebohrung 27, womit sich der Einpreßvorgang erleichtert. Der konischen Anfasung 3 schließt sich ein Schaftabschnitt 4 an, dessen Durchmesser dem Durchmesser der Bohrung 2 im Bereich der Aufnahmebohrung 27 spielfrei angepaßt ist. Der Schaftabschnitt 4 weist eine radial umlaufende Einschnürung 5 auf. Dieser schließt sich unmittelbar ein zylindrischer Verdrängungskörper 7 an, dessen Außendurchmesser größer ist als der Bohrungsdurchmesser im Bereich der Aufnahmebohrung 27. Dem Verdrängungskörper 7 folgt ein Absatz in Form eines Bundes 8, dessen Außendurchmesser erheblich größer ist als der Außendurchmesser des Verdrängungskörpers 7. Von der ersten Anschlagschulter 9 am Bund 9 abgewandt, befindet sich am Bund 8 eine zweite Anschlagschulter 11 zur Aufnahme des Einpreßwerkzeuges 10 sowie das am Ventilsitz 12 anlegbare, kugelförmige Verschlußstück 13 des Ventilschließgliedes 1. Die Fig. 2 verdeutlicht hierzu die Ausrichtung vorgenannter Teile zu Beginn des Einpreßvorganges, wozu das Einpreßwerkzeug 10 über das Verschlußstück 13 gestülpt ist, von diesem bei Bedarf zentriert wird und an der zweiten Anschlagschulter 30 zur Anlage gelangt, um die erforderliche Einpreßkraft auf das Ventilschließglied 1 zu übertragen. Die Fig. 1 zeigt das Ventilschließglied 1 in einer Position, in der sich die Anfasung 3 in die Aufnahmebohrung 27 erstreckt und gerade mit dem zylinderförmigen Schaftabschnitt 4 die Aufnahmebohrung 27 kontaktiert, so daß bei Überwindung der Reibkraft sich das Ventilschließglied 1 bis zur Anlage des Verdrängungskörpers 7 am Führungskörper 6 unter nahezu gleichbleibendem Reibkraftaufwand in die Aufnahmebohrung 27 bewegt. In dieser Zwischenposition bildet die von der Wandung der Aufnahmebohrung 27 begrenzte Einschnürung 5 einen Ringraum, in den sich der relativ weiche Werkstoff des Führungskörpers 6 verformt, sobald der Verdrängungskörper 7 in den Führungskörper 6 eindringt. Der Einpreßvorgang des Ventilschließgliedes 1 ist abgeschlossen, sobald die dem Verdrängungskörper 7 folgende erste Anschlagschulter 9 an der Stirnfläche des Führungskörpers 6 anliegt. Zwecks Aufnahme des in Richtung der Einschnürung 5 verformten Magnetankerwerkstoffes kann bei Bedarf die rillenförmige Einschnürung 5 größer als gezeigt ausgeführt werden oder es kann eine zusätzliche Einschnürung 5 am Schaftabschnitt 4 vorgesehen sein.

Durch die vorgeschlagene Erfindung ist es möglich, auf bisher notwendige, zusätzliche Außenverstemmaßnahmen und Sicherungsmittel für das Ventilschließglied 1 zu verzichten sowie die Einpreßtiefe des Ventilschließgliedes 1 zu überwachen. Mit Abschluß des Einpreßvorganges erstreckt sich sodann das Ventilschließglied 1 mit seiner Anfasung 3 bis in den Bereich eines zu ihm quer einmündenden Druckausgleichskanals 29, der in die erweiterte Bohrung 2 einmündet.

### Bezugszeichenliste

- 1: Ventilschließglied
- 2: Bohrung
- 3: Anfasung
- 4: Schaftabschnitt
- 5: Einschnürung
- 6: Führungskörper
- 7: Verdrängungskörper
- 8: Bund
- 9: Anschlagschulter
- 10: Einpreßwerkzeug
- 11: Druckmittelkanal
- 12: Ventilsitz
- 13: Ventilstück
- 14: Ventilgehäuse
- 15: Spule
- 16: Verschlußstopfen
- 17: Ringraum
- 18: Jochring
- 19: Magnetschlußscheibe
- 20: Ventilaufnahmekörper
- 21: Gehäuseöffnung
- 22: Druckfeder
- 23: Spulenträger
- 24: Rasthaken
- 25,26: Filterelemente
- 27: Aufnahmebohrung
- 28: Auflagefläche
- 29: Druckausgleichskanal
- 30: Anschiagschulter

## Patentansprüche

1. Drucksteuerventil, insbesondere für schlupfgeregelte Kraftfahrzeugbremsanlagen, mit einem Ventilgehäuse (14), das in einer Gehäuseöffnung (21) einen Ventilsitz (12) aufnimmt, mit einem am Ventilsitz (12) anlegbaren Ventilschließglied (1), das am Ventilsitz (12) angeschlossene Druckmittelkanäle (11) miteinander zu verbinden oder zu trennen vermag, mit einer Bohrung (2) in einem Führungskörper (6) zur Aufnahme des Ventilschließgliedes (1), der sich axial beweglich an der Wandung des Ventilgehäuses (14) abstützt, mit einer am Ventilschließglied angebrachten konischen Anfasung (3), die sich zwischen dem Ventilschließglied (1) und dem Führungskörper (6) in Richtung der Bohrung (2) erstreckt, wobei der konischen Anfasung (3) ein spielfreier Fügeabschnitt zwischen dem Führungskörper (6) und dem Ventilschließglied (1) folgt, und wobei der spielfreie Fügeabschnitt eine radial umlaufende Einschnürung (5) aufweist, die das beim Einpressen verdrängte Werkstoffvolumen aufnimmt, **gekennzeichnet: durch** nachfolgende Merkmale:
- der Einschnürung (5) folgt ein zylindrischer Verdrängungskörper (7), dessen Durchmesser größer ist als der Bohrungsdurchmesser im Führungskörper (6),
- dem Verdrängungskörper (7) schließt sich ein Bund (8) an, dessen der Aufnahmebohrung (27) zugewandte erste Anschlagschulter (9) an der Außenkontur des Führungskörpers (6) anliegt,
- zur Aufnahme eines Einpreßwerkzeuges ist eine von der ersten Anschlagschulter (9) abgewandte zweite Anschlagschulter (30) vorgesehen, die ein am Ventilsitz (12) anlegbares Verschlußstück (13) aufnimmt.

2. Drucksteuerventil nach Anspruch 1, **dadurch gekennzeichnet, daß** der Führungskörper (6) mittels einer am Ventilgehäuse (14) angebrachten Ventilspule (15) elektromagnetisch betätigbar ist.

3. Drucksteuerventil nach Anspruch 1 oder 2, **dadurch gekennzeichnet, daß** das Ventilgehäuse (14) mittels eines eingepreßten Verschlußstopfens (16) auf der dem Ventilsitz (12) abgewandten Gehäuseseite verschlossen ist.

4. Drucksteuerventil nach Anspruch 3, **dadurch gekennzeichnet, daß** der Verschlußstopfen (16) zur Einstellung des Hubs für den Führungskörper (6) im Ventilgehäuse (14) axial verschiebbar ist und die Funktion eines Magnetkerns übernimmt.

5. Drucksteuerventil nach Anspruch 4, **dadurch gekennzeichnet, daß** zwischen dem Verschlußstopfen (16) und der Spule (15) ein Ringraum (17) gelegen ist.

6. Drucksteuerventil nach Anspruch 5, **dadurch gekennzeichnet, daß** die Spule (15) in einem Jochring (18) eingefaßt ist, der mit einem Ende auf einer am Ventilgehäuse (14) zentrierten Magnetschlußscheibe (19) anliegt, mit dem anderen Ende über den Ringraum (17) vom Verschlußstopfen (16) getrennt ist.

7. Drucksteuerventil nach einem der vorhergehenden Ansprüche 5 oder 6, **dadurch gekennzeichnet, daß** sich in den Ringraum (17) eine die Ventilspule (15) fixierende Vergußmasse erstreckt.

## Claims

1. Pressure control valve, in particular, for slip-controlled automotive vehicle brake systems, including a valve housing (14) which houses a valve seat (12) in a housing opening (21), a valve closure member (1) which is movable into abutment on the valve seat (12) and adapted to interconnect or isolate pressure fluid channels (11) connected to the valve seat (12), a bore (2) in a guide element (6) for the accommodation of the valve closure member (1) which is axially movably supported on the wall of the valve housing (14), a conical chamfer (3) provided on the valve closure member and extending between the valve closure member (1) and the guide element (6) in the direction of the bore (2), with a clearance-free jointing portion between the guide element (6) and the valve closure member (1) following the conical chamfer (3), and with said clearance-free jointing portion including a radially circumferential waist (5) which accommodates the volume in material displaced during the press fit operation,
**characterized by** the following features:
- following the waist (5) is a cylindrical displacement member (7) having a larger diameter than the bore diameter in the guide element (6),
- adjacent to the displacement member (7) is a collar (8) having a first stop shoulder (9) close to the accommodating bore (27) which abuts on the outside contour of the guide element (6),
- for the accommodation of a press fit tool there is provision of a second stop shoulder (30) that is remote from the first stop shoulder (9) and accommodates a closure member (13) movable into abutment on the valve seat (12).

2. Pressure control valve as claimed in claim 1,
**characterized in that** the guide element (6) is operable electromagnetically by means of a valve coil (15) attached to the valve housing (14).

3. Pressure control valve as claimed in claim 1 or claim 2,
**characterized in that** the valve housing (14) is closed by means of a press fitted closure plug (16) on the housing side remote from the valve seat (12).

4. Pressure control valve as claimed in claim 3,
**characterized in that** the closure plug (16) for the adjustment of the stroke for the guide element (6) is axially displaceable in the valve housing (14) and performs the function of a magnetic core.

5. Pressure control valve as claimed in claim 4,
**characterized in that** an annular chamber (17) is positioned between the closure plug (16) and the coil (15).

6. Pressure control valve as claimed in claim 5,
**characterized in that** the coil (15) is encompassed in a yoke ring (18) which, with its one end, abuts on a solenoid end plate (19) centred on the valve housing (14) and, with its other end, is isolated from the closure plug (16) by the annular chamber (17).

7. Pressure control valve as claimed in any one of the preceding claims 5 or 6,
**characterized in that** a sealing compound fixing the valve coil (15) extends into the annular chamber (17).

## Revendications

1. Soupape de commande de pression, en particulier pour systèmes de freinage de véhicule à régulation du glissement, comportant un boîtier (14) de la soupape qui reçoit un siège (12) de la soupape dans une ouverture (21) du boîtier, comportant un obturateur (1) de la soupape qui peut s'appliquer contre le siège (12) de la soupape et qui est apte à relier entre eux ou à séparer des canaux de fluide sous pression (11) raccordés au siège (12) de la soupape, comportant un alésage (2) dans un corps de guidage (6) pour recevoir l'obturateur (1) de la soupape, lequel corps prend appui, déplaçable axialement, contre la paroi du boîtier (14) de la soupape, et comportant un chanfrein conique (3) qui est pratiqué sur l'obturateur de la soupape, qui s'étend entre l'obturateur (1) de la soupape et le corps de guidage (6) en direction de l'alésage (2), une portion de jonction sans jeu, entre le corps de guidage (6) et l'obturateur (1) de la soupape, suivant le chanfrein conique (3), et la portion de jonction sans jeu présentant un rétrécissement (5) périphérique radialement, qui reçoit le volume de matière refoulée lors de la compression, **caractérisée par** les caractéristiques suivantes :
- un corps de refoulement (7) cylindrique, dont le diamètre est supérieur au diamètre de l'alésage dans le corps de guidage (6), suit le rétrécissement (5),
- au corps de refoulement (7) fait suite un épaulement (8) dont le premier épaulement de butée (9), tourné vers l'alésage de réception (27), s'applique contre le contour extérieur du corps de guidage (6),
- il est prévu un deuxième épaulement de butée (30), tourné à l'opposé du premier épaulement de butée (9), pour recevoir un outil d'enfoncement, et qui reçoit une pièce de fermeture (13) qui peut s'appliquer contre le siège (12) de la soupape.

2. Soupape de commande de pression selon la revendication 1, **caractérisée en ce que** le corps de guidage (6) peut être actionné de manière électromagnétique au moyen d'une bobine de soupape (15) placée sur le boîtier (14) de la soupape.

3. Soupape de commande de pression selon la revendication 1 ou 2, **caractérisée en ce que** le boîtier (14) de la soupape est fermé au moyen d'un bouchon de fermeture (16) enfoncé à l'intérieur, sur le côté du boîtier tourné à l'opposé du siège (12) de la soupape.

4. Soupape de commande de pression selon la revendication 3, **caractérisée en ce que** le bouchon de fermeture (16) peut coulisser axialement dans le boîtier (14) de la soupape, pour régler la course du corps de guidage (6), et assure la fonction d'un noyau magnétique.

5. Soupape de commande de pression selon la revendication 4, **caractérisée en ce qu'**un espace annulaire (17) est placé entre le bouchon de fermeture (16) et la bobine (15).

6. Soupape de commande de pression selon la revendication 5, **caractérisée en ce que** la bobine (15) est enserrée dans un anneau de culasse (18) qui, par une extrémité, s'applique sur un disque de liaison magnétique (19) centré sur le boîtier (14) de la soupape, et est séparé, par l'autre extrémité, à travers l'espace annulaire (17), du bouchon de fermeture (16).

7. Soupape de commande de pression selon l'une des revendications 5 ou 6 précédentes, **caractérisée en ce qu'**une pâte de scellement fixant la bobine de soupape (15) s'étend dans l'espace annulaire (17).
